# FASCICULE DE BREVET EUROPEEN

(11) **EP 3 555 612 B1**
(45) Date de publication et mention de la délivrance du brevet: **27.01.2021**
(21) Numéro de dépôt: 17822407.7
(22) Date de dépôt: 13.12.2017
(51) Int. Cl.: G01N 29/04, B06B 1/06, G01N 29/22, G01N 29/24, G01N 29/44, G01S 15/89

(54) **DISPOSITIF ET PROCÉDÉ DE CARACTÉRISATION NON-DESTRUCTIVE D'UN MATÉRIAU PAR ULTRASONS**
VORRICHTUNG UND VERFAHREN ZUR ZERSTÖRUNGSFREIEN CHARAKTERISIERUNG EINES MATERIALS MITTELS ULTRASCHALL
DEVICE AND METHOD FOR NON-DESTRUCTIVE ULTRASONIC CHARACTERISATION OF A MATERIAL

(30) Priorité: 19.12.2016 FR 1662786
(43) Date de publication de la demande: 23.10.2019
(73) Titulaire: Safran, 75015 Paris (FR)
(72) Inventeur: DUCOUSSO, Mathieu, Loïc, 77550 Moissy-Cramayel (FR); JENSON, Frédéric, 77550 Moissy-Cramayel (FR)
(74) Mandataire: Cabinet Beau de Loménie
(86) Numéro de dépôt international: PCT/FR2017/053539
(87) Numéro de publication internationale: WO 2018/115640

(56) Documents cités:
- WO-A1-2013/041856
- US-A1- 2005 124 884
- DRINKWATER B W ET AL: "Ultrasonic arrays for non-destructive evaluation: A review", NDT & E INTERNATIONAL, BUTTERWORTH-HEINEMANN, OXFORD, GB, vol. 39, no. 7, 1 octobre 2006 (2006-10-01), pages 525-541, XP027969035, ISSN: 0963-8695 [extrait le 2006-10-01]
- MARTINEZ O ET AL: "A small 2D ultrasonic array for NDT applications", NDT & E INTERNATI, BUTTERWORTH-HEINEMANN, OXFORD, GB, vol. 36, no. 1, 1 janvier 2003 (2003-01-01), pages 57-63, XP004400326, ISSN: 0963-8695, DOI: 10.1016/S0963-8695(02)00072-5
- DEGERTEKIN ET AL: "Annular-ring CMUT arrays for forward-looking IVUS: transducer characterization and imaging", IEEE TRANSACTIONS ON ULTRASONICS, FERROELECTRICS AND FREQUENCY CONTROL, IEEE, US, vol. 53, no. 2, 1 février 2006 (2006-02-01), pages 474-482, XP011148779, ISSN: 0885-3010, DOI: 10.1109/TUFFC.2006.1593387

## Description

### Arrière-plan de l'invention

L'invention concerne un dispositif de caractérisation non-destructive d'un matériau et un procédé de caractérisation non-destructive mis en œuvre par ce dispositif.

Les procédés de contrôle et de caractérisation non-destructive (CND) jouent un rôle de premier plan notamment dans les domaines de l'automobile, de la santé ou encore de l'aéronautique. Ces procédés peuvent permettre de caractériser l'état d'intégrité de pièces (ex : ailes d'avion, pièces de moteur), de structures (ex : poly-cristallines, multicouches) et plus généralement de matériaux à tout moment de leur cycle de vie par exemple durant leur production, utilisation ou maintenance. L'utilisation de ces procédés est d'autant plus importante dans le secteur de l'aéronautique que les structures conçues, aussi bien monolithiques qu'assemblées, doivent présenter des caractéristiques répondant à des normes extrêmement strictes.

Divers procédés connus consistent à appliquer une excitation ultrasonore lors de l'émission d'un transducteur à destination d'un matériau à caractériser, puis de détecter en un ou plusieurs éléments de réception de ce transducteur un signal caractéristique du matériau, ce signal étant généré par l'excitation ultrasonore.

Le document EP2440140 décrit par exemple un transducteur ultrasonore se présentant sous la forme d'une barrette monodimensionnelle pour lequel un matériau est caractérisé via la propagation d'ondes ultrasonores à travers ce matériau. Un tel transducteur ne permet cependant pas de caractériser un matériau selon toutes les directions spatiales. Une telle caractérisation s'avère pourtant indispensable, notamment pour la caractérisation de matériaux anisotropes. Une solution envisageable pour répondre à ce problème pourrait alors consister à déplacer ce transducteur manuellement ou encore réaliser un montage mécanique pour déplacer ce transducteur selon différentes configurations spatiales ou angulaires. Une telle solution s'avère néanmoins limitée car implique la réalisation de montages mécaniques complexes, un positionnement approximatif et peu précis du transducteur pour réaliser les mesures, ainsi qu'un temps de caractérisation important du matériau puisqu'un tel transducteur devrait être déplacé manuellement ou mécaniquement pour chaque direction de mesure.

L'utilisation de transducteurs ultrasonores réalisés sous une forme matricielle d'éléments d'émission/réception est aussi connue de l'état de l'art. A titre d'exemple, le document WO2015011383 décrit notamment un transducteur se présentant sous la forme d'une matrice d'éléments émetteurs/récepteurs qui peuvent être activés de manière sélective afin de former une surface de détection formant un motif en forme de croix. Un tel transducteur permet notamment de contrôler une zone de soudure en analysant des ondes ultrasonores réfléchies sur la zone de soudure. De par sa forme matricielle une telle solution nécessite un nombre élevé d'éléments émetteurs/récepteurs. Cependant, un certain nombre de ces éléments ne sont pas toujours utilisés pour former la surface de détection du transducteur. Un tel transducteur s'avère alors couteux en termes de coût de fabrication compte tenu du nombre important d'éléments le constituant. Par ailleurs, le nombre important d'éléments récepteurs pour un tel transducteur implique une grande quantité de données acquises pouvant conduire à ralentir le contrôle du matériau à caractériser, notamment durant le transfert de ces données vers une unité de post-traitement.

En l'état, les solutions actuelles ne permettent pas pour la caractérisation d'un matériau de proposer un transducteur ultrasonore qui est à la fois fiable, précis, rapide et peu couteux.

### Objet et résumé de l'invention

La présente invention a pour but de remédier aux inconvénients précités.

A cet effet, l'invention propose un dispositif de caractérisation non-destructive d'un matériau, le dispositif comprenant des cellules d'émission/réception, chaque cellule étant configurée pour, dans un mode d'émission, émettre des ondes ultrasonores en direction du matériau à caractériser et, dans un mode de réception, recevoir des ondes ultrasonores transmises à travers ledit matériau, le dispositif de caractérisation non-destructive comprenant un anneau constitué d'une pluralité de secteurs angulaires adjacents, chaque secteur angulaire comprenant dans une direction radiale de l'anneau un empilement de cellules d'émission/réception, le dispositif comprenant en outre des moyens de commande comportant
- un premier module de sélection configuré pour sélectionner un secteur angulaire comme secteur angulaire d'émission,
- un deuxième module de sélection configuré pour sélectionner un ensemble de secteurs angulaires adjacents comme secteurs angulaires de réception, le deuxième module étant configuré pour sélectionner ledit ensemble sur une plage angulaire diamétralement opposée au secteur angulaire d'émission,
- un premier module de commutation configuré pour commuter la totalité des cellules des secteurs angulaires de réception dans le mode de réception,
- un deuxième module de commutation configuré pour commuter alternativement une cellule à la fois du secteur angulaire d'émission dans le mode d'émission,
les moyens de commande étant configurés pour actionner les modules pour différents secteurs angulaires.

Avantageusement, l'anneau du dispositif de caractérisation non-destructive est évidé en son centre, c'est-à-dire qu'il ne comprend pas de cellules d'émission/réception. Il est ainsi possible de disposer l'anneau en contact ou autour du matériau à caractériser. En outre, les cellules d'émission/réception d'un tel dispositif peuvent être sélectionnées individuellement et commandées pour commuter dans un mode d'émission ou dans un mode de réception. Il devient ainsi possible de mettre en œuvre via l'anneau du dispositif, séquentiellement ou en combinaison, un balayage radial et un balayage rotatif autour du matériau à caractériser. Le matériau peut ainsi être caractérisé selon n'importe quelle direction angulaire, sans déplacement du matériau ou du dispositif de caractérisation après chaque mesure angulaire, et ce grâce à la possibilité de commutation des cellules d'émission/réception. Un tel dispositif permet donc de s'affranchir de montages mécaniques complexes visant à caractériser le matériau selon différentes directions et permet d'obtenir une précision pour les mesures bien plus importante que pour des montages mécaniques. Un tel dispositif présente alors un encombrement réduit et présente par ailleurs la possibilité de diminuer le nombre des cellules d'émission/réception le constituant si le matériau à inspecter présente des symétries structurales. Un tel dispositif peut ainsi présenter une masse réduite, un volume de données à traiter moins important avec une précision de mesures accrue ainsi qu'un coût de fabrication réduit. En outre, un tel dispositif permet de réaliser un gain de temps considérable pour les mesures visant à caractériser le matériau, la transition entre deux mesures étant réalisée par une simple commutation des cellules d'émission/réception.

Selon un autre aspect, dans ce dispositif de caractérisation, chaque secteur angulaire comporte le même nombre de cellules.

Selon un autre aspect, dans ce dispositif de caractérisation, l'anneau comprend une première plage angulaire et une seconde plage angulaire, chaque secteur angulaire de la première plage angulaire comportant un nombre de cellules inférieur au nombre de cellules des secteurs angulaires de la seconde plage angulaire.

Selon un autre aspect, dans ce dispositif de caractérisation, les secteurs angulaires de la première plage angulaire et de la seconde plage angulaire s'étendent depuis un même bord circonférentiel intérieur de l'anneau.

Selon un autre aspect, dans ce dispositif de caractérisation, les secteurs angulaires de la première plage angulaire et de la seconde plage angulaire s'étendent depuis un même bord circonférentiel extérieur de l'anneau.

Selon un autre aspect, dans ce dispositif de caractérisation, la première plage angulaire est inférieure ou égale à 180°.

Selon un autre aspect, dans ce dispositif de caractérisation, la première plage angulaire est strictement supérieure à 180°.

L'invention propose également un procédé de caractérisation non-destructive d'un matériau mis en œuvre par le dispositif de caractérisation non-destructive décrit ci-dessus, ce procédé comprenant :
a) une étape de positionnement du dispositif au contact ou autour dudit matériau,
b) la sélection d'un secteur angulaire comme secteur angulaire d'émission,
c) la sélection d'un ensemble de secteurs angulaires adjacents comme secteurs angulaires de réception, ledit ensemble étant sélectionné sur une plage annulaire diamétralement opposée au secteur angulaire d'émission,
d) la commutation de la totalité des cellules des secteurs angulaires de réception dans le mode de réception,
e) une étape d'émission d'ondes ultrasonores par une cellule dans le mode d'émission en direction dudit matériau, générant des ondes ultrasonores transmises à travers ledit matériau,
f) une étape de réception par les cellules dans le mode de réception des ondes ultrasonores transmises à travers ledit matériau,
g) une étape de traitement des ondes ultrasonores transmises à travers ledit matériau après l'étape de réception.

Selon un autre aspect, ce procédé caractérisation comprend en outre :
h) la commutation alternative d'une cellule du secteur angulaire d'émission dans le mode d'émission.

Selon un autre aspect, dans ce procédé une cellule du secteur angulaire d'émission est commutée à la fois dans le mode d'émission.

Selon un autre aspect, ce procédé de caractérisation comprend après chaque étape de traitement des ondes ultrasonores transmises la répétition des étapes b) à f) pour des secteurs angulaires successifs.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 représente schématiquement un dispositif de caractérisation non-destructive d'un matériau,
- les figures 2A à 2E illustrent différentes étapes d'un premier balayage réalisé par un transducteur du dispositif de caractérisation non-destructive en vue de caractériser un matériau,
- les figures 3A à 3E illustrent différentes étapes d'un deuxième balayage réalisé par le transducteur du dispositif de caractérisation non-destructive en vue de caractériser un matériau,
- les figures 4A à 4D illustrent différentes variantes de réalisation du transducteur du dispositif de caractérisation non-destructive.

### Description détaillée de modes de réalisation

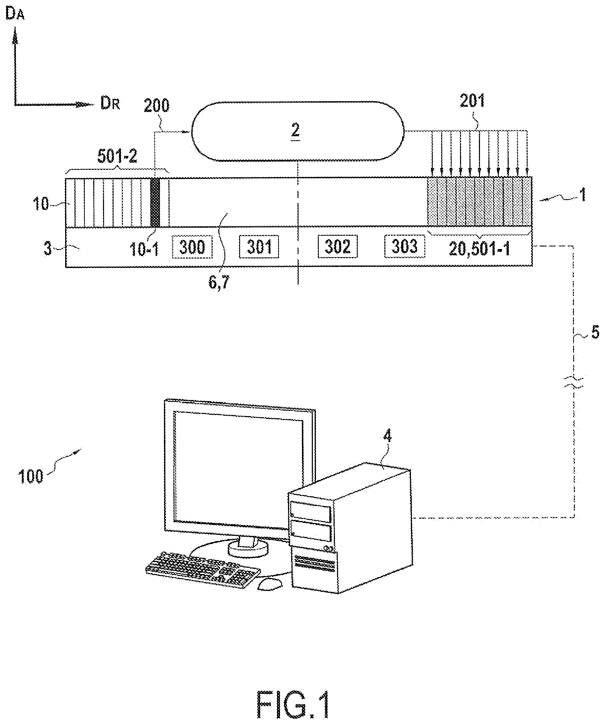

La figure 1 illustre un dispositif 100 de caractérisation non-destructive par ondes ultrasonores pour déterminer les caractéristiques d'un matériau 2. Le dispositif 100 comprend un transducteur 1 ultrasonore, c'est-à-dire une sonde, comprenant une pluralité de cellules 10 d'émission/réception. Chaque cellule 10 d'émission/réception peut être commutable dans un mode d'émission pour émettre des ondes ultrasonores en direction du matériau 2 à caractériser ou dans un mode de réception pour recevoir des ondes ultrasonores transmises/guidées à travers ledit matériau 2. Le transducteur 1 est associé à des moyens de commande 3 aptes à sélectionner et commuter toute cellule 10 du transducteur 1 ultrasonore en un mode d'émission, en un mode de réception ou encore laisser cette cellule 10 inactive. Dans l'exemple illustré, et comme il sera détaillé plus loin, les moyens de commande 3 ont commuté une cellule 10-1 (cellule colorée en noir) en mode d'émission et un ensemble 20 de cellules 10, ici onze, en mode de réception (cellules colorées en gris), les autres cellules 10 étant laissées inactives (cellules colorées en blanc).

Le transducteur 1 présente ainsi une surface d'émission/réception d'ondes ultrasonores, formée par les cellules 10, de forme plane et peut être appliqué directement en contact contre le matériau 2 à caractériser. Dans d'autres exemples le transducteur 1 peut être en contact indirect avec le matériau 2 via l'intermédiaire d'un médium (ex: relais en plexiglas) ou être utilisé en immersion autour du matériau 2 à inspecter afin de favoriser la propagation des ondes ultrasonores.

De manière connue les cellules 10 d'émission/réception sont des vibrateurs piézo-électriques. Chaque cellule d'émission du transducteur 1 transforme un signal électrique reçu depuis les moyens de commande 3 en un signal ultrasonore qui est transmis (flèche 200) au matériau 2. Chaque cellule de réception du transducteur 1 transforme un signal ultrasonore reçu (flèches 201) depuis le matériau 2 en un signal électrique qui est ensuite envoyé vers une unité de traitement 4, le signal électrique étant transmis par exemple via une liaison filaire 5 à cette unité. L'unité de traitement 4 comprend des moyens pour traiter les signaux provenant des cellules en mode de réception. A titre d'exemple l'unité de traitement 4 peut extraire les variations de vitesse de phase en fonction de la fréquence des ondes ultrasonores qui se sont propagées à travers le matériau 2, les mettre en corrélation avec les cellules 10 d'émission/réception, générer des données d'image tridimensionnelle, détecter des tailles/positions d'un défaut relatif au matériau 2 inspecté et afficher les résultats de la détection, par exemple sous forme d'une cartographie. Les ondes transmises à travers le matériau 2 sont des ondes guidées, par exemple des ondes de Lamb. Avantageusement, ces ondes présentent des longueurs d'onde comparables aux dimensions du matériau 2 à inspecter et sont ainsi guidées dans ce matériau 2. La réception de ces ondes permet alors de caractériser le matériau 2. A titre d'exemple, il est possible via l'unité de traitement 4 de décomposer le signal reçu par chaque cellule de réception en valeurs singulières et de déduire les courbes de dispersions des signaux réceptionnés. De manière générale, le dispositif 100 de caractérisation non-destructive permet de caractériser les propriétés de tout matériau 2, notamment les matériaux anisotropes. Le matériau 2 à caractériser peut à titre d'exemple être une structure monolithique, une structure poly-cristalline (ex : titane) ou une structure assemblée. Les propriétés du matériau 2 à caractériser peuvent par exemple concerner les épaisseurs des couches pour un matériau multicouche, ses propriétés élastiques, ses constantes élastiques, ses pertes d'épaisseur par corrosion ou encore sa matrice de rigidité.

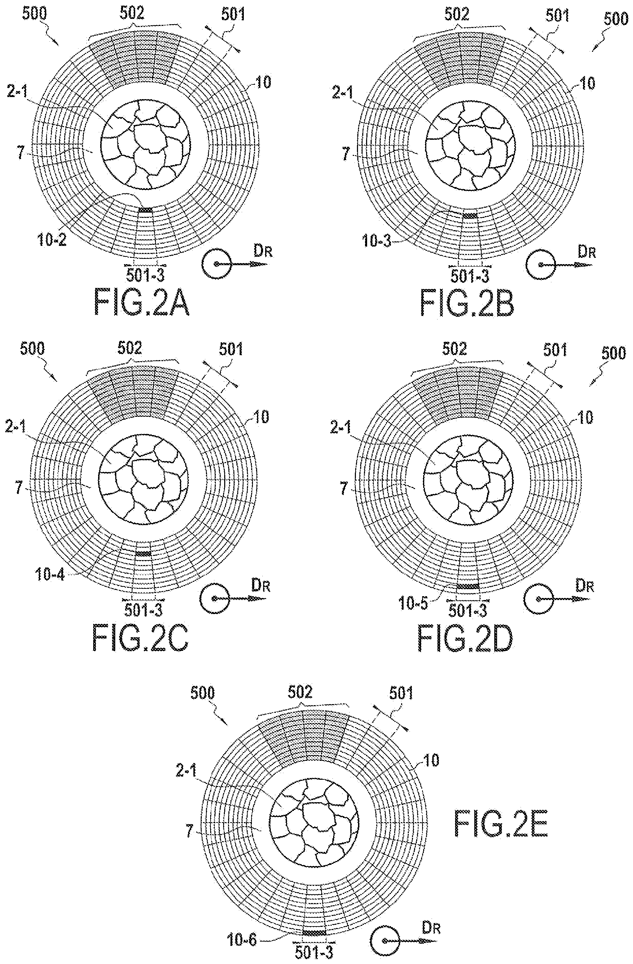

Conformément à l'invention le transducteur 1 ultrasonore se présente sous la forme d'un anneau 500 dont un exemple de réalisation est illustré sur les figures 2A à 3E. L'anneau 500 est ici défini par rapport à une direction axiale DA et est composé d'une pluralité de secteurs angulaires 501 adjacents selon une direction circonférentielle. Chaque secteur angulaire 501 comprend dans une direction radiale DR de l'anneau 500 un empilement de cellules 10 d'émission/réception. A titre d'exemple, sur la figure 1 l'ensemble 20 des cellules 10 en mode de réception constitue un secteur angulaire 501-1 diamétralement opposé à un secteur angulaire 501-2 comprenant la cellule 10-1 qui est en mode d'émission. Les secteurs angulaires 501 diamétralement opposés tels les secteurs angulaires 501-1 et 501-2 peuvent éventuellement être séparés par une barrière 6 empêchant la transmission ultrasonore directe entre la partie émission, formée dans cet exemple par la cellule 10-1 en mode d'émission, et la partie réception, formée ici par l'ensemble 20 des cellules en mode de réception. Plus généralement, le transducteur 1 ne comprend pas de cellules 10 d'émission/réception dans sa partie centrale 7 qui est évidée, comme illustré sur l'ensemble des figures.

Les figures 2A-3E illustrent différentes étapes permettant d'inspecter un matériau 2, ici une structure poly-cristalline 2-1.

Au cours d'une étape initiale, le dispositif 100 est positionné au contact, de manière directe ou indirecte, du matériau 2 à caractériser, ici la structure poly-cristalline 2-1. Alternativement, le dispositif est positionné en immersion autour du matériau 2 à caractériser. Les dimensions de l'anneau 500 et de ses cellules 10 d'émission/réception sont déterminées au préalable de manière à ce que la partie centrale 7 présente des dimensions plus importante que le matériau 2 à caractériser, celui-ci étant positionné au contact ou en regard de la partie centrale 7. De même les fréquences utilisées par les cellules 10 d'émission/réception sont choisies en fonction des paramètres du matériau 2 que l'on souhaite inspecter et de l'échelle de caractérisation que l'on souhaite investiguer. A titre d'exemple pour la structure poly-cristalline 2-1 il est possible d'effectuer une caractérisation à l'échelle d'un grain unique ou d'un paquet de grains en fonction des fréquences ultrasonores choisies. Les fréquences ultrasonores sont néanmoins choisies de manière à obtenir des longueurs d'ondes présentant des dimensions comparables au matériau 2 à caractériser, de manière à ainsi obtenir des ondes guidées (ex : ondes de surfaces et/ou ondes de structures) à travers le matériau 2.

Une fois le dispositif 100 positionné, le matériau 2 est soumis à un double balayage permettant sa caractérisation.

Un premier balayage de type radial est illustré sur les figures 2A à 2E. Au cours de ce balayage, pour un même secteur angulaire 501-3 une seule cellule 10-2, 10-3, 10-4, 10-5, 10-6 est alternativement sélectionnée puis commutée dans un mode d'émission. Un ensemble 502 comprenant une pluralité de secteurs angulaires 501 adjacents est sélectionné et la totalité des cellules 10 de cet ensemble 502 sont commutées dans un mode de réception. L'ensemble 502 est toujours sélectionné sur une plage angulaire diamétralement opposée au secteur angulaire 501-1 comprenant la cellule 10-2, 10-3, 10-4, 10-5, 10-6 commutée en mode d'émission. Par ailleurs, comme il sera expliqué par la suite, on veille à que cet ensemble 502 soit toujours formé d'au moins deux secteurs angulaires 501 adjacents.

La caractérisation du matériau 2 selon le premier balayage consiste alors alternativement pour chaque cellule 10-2, 10-3, 10-4, 10-5, 10-6 commutée en mode d'émission à émettre des ondes ultrasonores en direction dudit matériau 2, générant alors des ondes transmises/guidées à travers ledit matériau 2. Ces ondes guidées transmises/guidées à travers le matériau 2 sont ensuite réceptionnées par les différentes cellules 10 de l'ensemble 502, ces cellules étant commutées dans un mode de réception. Une étape de traitement des ondes ultrasonores réceptionnées par les cellules 10 peut être alors réalisée via l'unité de traitement 4.

En pratique la sélection et la commutation des cellules dans un mode d'émission ou de réception est réalisée par les moyens de commande 3.

Ces moyens de commande 3 peuvent par exemple comprendre :
- un premier module 300 de sélection configuré pour sélectionner un secteur angulaire 501 comme secteur angulaire d'émission (ex : le secteur angulaire 501-3 sur les figures 2A-2E),
- un deuxième module 301 de sélection configuré pour sélectionner un ensemble 502 de secteurs angulaires 501 adjacents comme secteurs angulaires de réception, cet ensemble 502 étant sélectionné sur une plage angulaire diamétralement opposée au secteur angulaire d'émission,
- un premier module 302 de commutation configuré pour commuter l'ensemble 502, c'est à dire la totalité des cellules des secteurs angulaires de réception, dans le mode de réception,
- un deuxième module 303 de commutation configuré pour commuter alternativement les cellules du secteur angulaire d'émission dans le mode d'émission. Ce deuxième module 303 de commutation peut notamment être configuré pour commuter une seule cellule à la fois dans le mode d'émission.

Les modules 300, 301, 302, 303 sont mis en œuvre par des moyens électroniques ou logiciels, les moyens de commande 3 pouvant actionner tout ou partie de ces modules pour tout secteur angulaire 501 de l'anneau 500.

Avantageusement, pour ce premier balayage la sélection d'un ensemble 502 de cellules de réception sur une plage angulaire diamétralement opposée à une cellule en mode d'émission permet de sonder la propagation des ondes ultrasonores à travers le matériau 2 selon deux vecteurs d'ondes normaux l'un à l'autre contrairement aux transducteurs monodimensionnels existants. Cette caractérisation selon deux vecteurs d'ondes normaux provient du fait que l'ensemble 502 est formé par une pluralité de secteurs angulaires 501 adjacents.

Par ailleurs, la sélection et la commutation alternée d'une cellule d'émission dans un même secteur angulaire 501 pour ce premier balayage, permet après traitement des signaux réceptionnés (ex : via une décomposition en valeur singulière) d'obtenir des courbes de dispersion des modes guidés à travers le matériau 2 à caractériser.

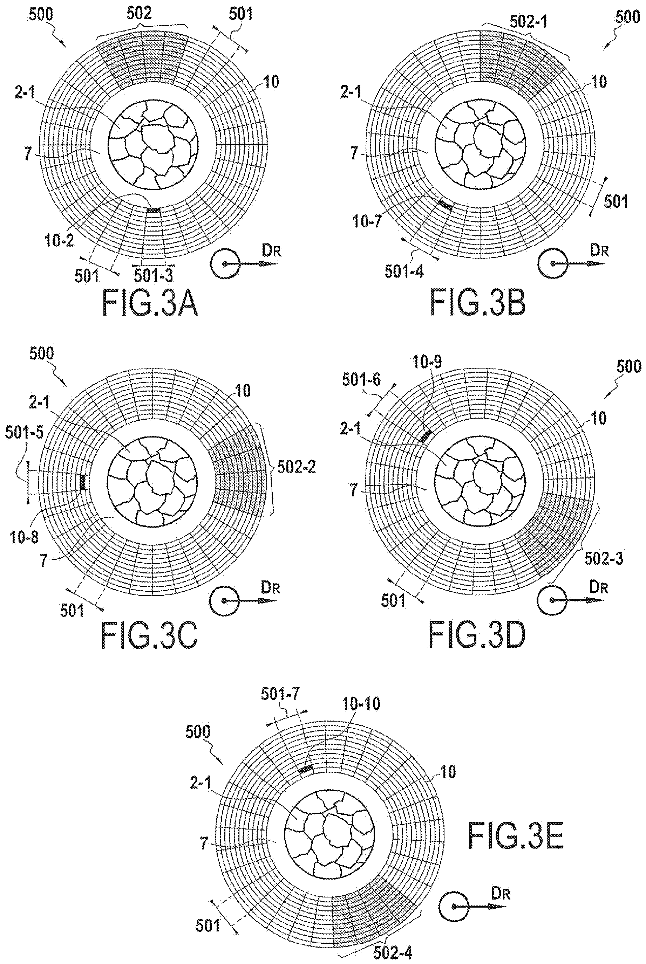

Un deuxième balayage est illustré sur les figures 3A à 3E. Comme il peut être vu sur ces figures, ce deuxième balayage est un balayage angulaire consistant à mettre en œuvre le premier balayage décrit précédemment pour différents secteurs angulaires 501 de l'anneau 500. Différents secteurs angulaires 501-3, 501-4, 501-5, 501-6, 501-7 sont successivement sélectionnés pour l'émission et au moins une cellule 10-2, 10-7, 10-8, 10-9, 10-10 de ces secteurs est commutée dans un mode d'émission. Des ensembles 502, 502-1, 502-2, 502-3, 502-4 de secteurs angulaires diamétralement opposés aux secteurs angulaires 501-3, 501-4, 501-5, 501-6, 501-7 pour l'émission sont alors sélectionnés en tant qu'ensembles de réception et la totalité de leurs cellules sont commutées dans un mode de réception. Le deuxième balayage est donc une mise en œuvre tournante, selon la direction axiale DA de l'anneau, du premier balayage. Ce deuxième balayage rotatif est mis en œuvre selon une plage angulaire de balayage prédéterminée, cette plage étant par exemple sélectionnée en fonction du matériau 2 à caractériser. On notera ici que les ensembles 502, 502-1, 502-2, 502-3, 502-4 sont formés de quatre secteurs angulaires successifs. Ce nombre n'est cependant choisi qu'à titre illustratif, ces ensembles pouvant être formés d'un plus grand nombre ou d'un moins grand nombre de secteurs angulaires 501. On veille cependant pour les premiers et deuxièmes balayages à toujours former un ensemble 502 comprenant une pluralité de secteurs angulaires 501 afin de sonder la propagation des ondes ultrasonores à travers le matériau 2 selon deux vecteurs d'ondes normaux l'un à l'autre.

Comme exposé précédemment, le matériau 2 à caractériser est soumis à un double balayage. Ainsi, afin de caractériser le matériau 2, les premiers et deuxièmes balayages peuvent être mis en œuvre de manière successive ou combinée par les moyens de commande 3. A titre d'exemple, la totalité des cellules d'un même secteur d'émission (ex : le secteur 501-3) peuvent être commutées tour à tour, puis le deuxième balayage change alors de secteur d'émission, en sélectionnant ensuite un secteur angulaire 501 distinct, par exemple un secteur adjacent. Dans un autre exemple, une cellule d'un premier secteur angulaire est utilisée en mode d'émission, puis le deuxième balayage commute une cellule d'un deuxième secteur angulaire distinct en mode d'émission, sans nécessairement que la totalité des cellules du premier secteur angulaire aient été commutées en mode d'émission. Cet exemple est observable sur les figures 3A à 3E où l'on constate qu'à chaque étape une seule cellule 10-2, 10-7, 10-8, 10-9, 10-10 dans un secteur angulaire 501-3, 501-4, 501-5, 501-6, 501-7 distinct du précédent est sélectionnée et commutée tour à tour en mode d'émission.

Avantageusement, le deuxième balayage permet de sonder la propagation des ondes ultrasonores guidées à travers le matériau 2 selon tous les angles possibles par rapport à la direction axiale DA de l'anneau. Ce balayage peut notamment permettre après traitement des signaux réceptionnés de déterminer une matrice de rigidité complète du matériau 2 inspecté.

La plage angulaire de balayage utilisée au cours du deuxième balayage est fonction du matériau 2 à caractériser. A titre d'exemple pour certains matériaux 2 il est possible de limiter la rotation du deuxième balayage à une plage angulaire égale à 180°, voire de réduire cette plage angulaire à un angle inférieur à 180° pour des matériaux 2 présentant des symétries structurales.

Il est donc éventuellement possible de réduire le nombre de cellules d'émission/réception 10 dans le dispositif 100. Une telle diminution du nombre de cellules d'émission/réception 10 peut être avantageuse notamment en termes de coût de fabrication du dispositif 100, de diminution de masse de celui-ci et de diminution de quantité de données réceptionnées à transmettre à l'unité de traitement 4, favorisant ainsi une analyse plus rapide du matériau 2 à caractériser.

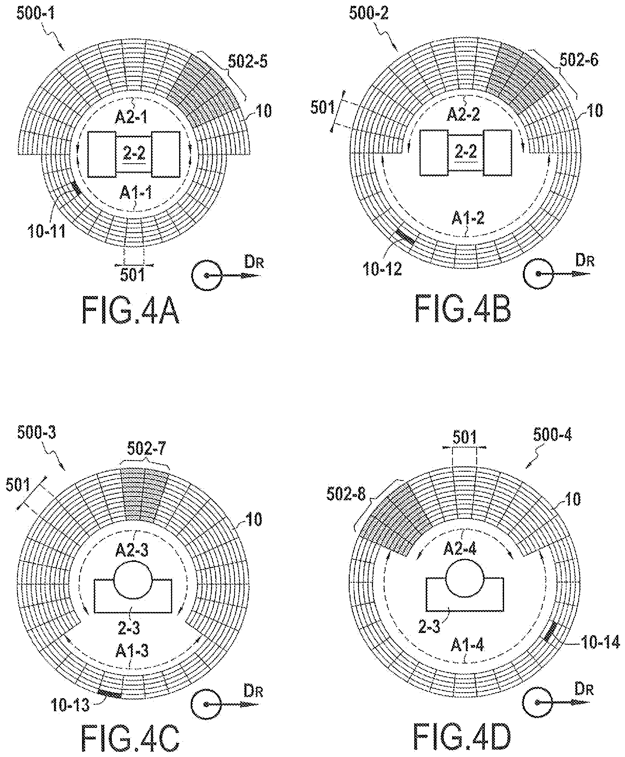

On remarquera que l'anneau 500 des figures précédemment décrites correspond à un mode de réalisation particulier pour lequel chaque secteur angulaire 501 comprend un même nombre de cellules. D'autres modes de réalisation d'anneaux 500-1, 500-2, 500-3, 500-4 présentant un nombre réduit de cellules 10 d'émission/réception sont représentés sur les figures 4A-4D. A des fins d'illustration, les matériaux 2 à caractériser représentés sur ces figures sont respectivement une structure 2-2 assemblée par soudage et une structure 2-3 assemblée par collage.

Les figures 4A et 4B illustrent des modes de réalisation pour lesquels un anneau 500-1, 500-2 comprend une première plage angulaire A1-1, A1-2 et une seconde plage angulaire A2-1, A2-2, toutes égales à 180°. Dans les modes de réalisation illustrés, le nombre de cellules 10 présentes dans chaque secteur angulaire 501 de la première plage angulaire A1-1, A1-2 est inférieur au nombre de cellules contenues dans chaque secteur angulaire de la seconde plage angulaire A2-1, A2-2. Si les secteurs angulaires de la première plage angulaire A1-1, A1-2 sont utilisés successivement pour sélectionner et commuter une cellule 10 dans un mode d'émission, alors les secteurs angulaires de la seconde plage angulaire A2-1, A2-2 seront utilisés pour former des ensembles de cellules en mode de réception sur une plage angulaire diamétralement opposée à la cellule en mode d'émission. Ces figures illustrent à titre d'exemple des cellules 10-11, 10-12 commutées en mode d'émission et des ensembles 502-5, 502-6 de secteurs angulaires diamétralement opposés, trois secteurs angulaires formant chaque ensemble 502-5, 502-6 dans ce cet exemple, dont les cellules sont commutées en mode de réception. Comme il peut être vu sur la Figure 4A les secteurs angulaires de la première plage angulaire A1-1 et de la seconde plage angulaire A2-1 s'étendent depuis un même bord circonférentiel intérieur de l'anneau 500-1. La distance entre les cellules en mode d'émission et les cellules en mode de réception est alors ici minimisée. A l'inverse, sur la Figure 4B les secteurs angulaires de la première plage angulaire A1-2 et de la seconde plage angulaire A2-2 s'étendent depuis un même bord circonférentiel extérieur de l'anneau 500-2. La distance entre les cellules en mode d'émission et les cellules en mode de réception est alors maximisée.

Les figures 4C et 4D illustrent respectivement d'autres modes de réalisation pour un anneau 500-3, 500-4 pour lequel des secteurs angulaires d'une première plage angulaire A1-3, A1-4 s'étendent depuis un même bord circonférentiel extérieur de l'anneau 500-3, 500-4. Dans un autre exemple non-illustré, les secteurs angulaires de la première plage angulaire peuvent s'étendre depuis un même bord circonférentiel intérieur de l'anneau 500-3, 500-4. Sur ces figures, le nombre de cellules 10 présentes dans chaque secteur angulaire de la première plage angulaire A1-3, A1-4 est inférieur au nombre de cellules 10 présentes dans chaque secteur angulaire d'une seconde plage angulaire A2-3, A2-4. Sur la figure 4C, la première plage angulaire A1-3 est inférieure à 180°. Sur la figure 4D, la première plage angulaire A1-4 est supérieure à 180°. Si les secteurs angulaires de la première plage angulaire A1-3, A1-4 sont utilisés successivement pour sélectionner et commuter une cellule 10 dans un mode d'émission, alors les secteurs angulaires de la seconde plage angulaire A2-3, A2-4 seront utilisés pour former des ensembles de cellules en mode de réception sur une plage angulaire diamétralement opposée à la cellule en mode d'émission. Ces figures illustrent à titre d'exemple des cellules 10-13, 10-14 commutées en mode d'émission et des ensembles 502-7, 502-8 de secteurs angulaires, trois secteurs angulaires formant chaque ensemble 502-7, 502-8 dans ce cet exemple, dont les cellules sont commutées en mode de réception.

Avantageusement, l'ensemble des modes de réalisations précédemment décrits peuvent être appliqués pour la caractérisation de tout matériau 2.

A titre d'exemple, pour la caractérisation d'une structure poly-cristalline 2-1, ces modes de réalisation permettent de collecter au niveau de la partie récepteur du transducteur 1 un jeu de données suffisant pour caractériser les orientations des grains de la structure par tomographie ultrasonore. En fonction des paramètres du dispositif 100 (ex : fréquences ultrasonores utilisées) le traitement par l'unité de traitement 4 des signaux réceptionnés permet alors la caractérisation de la structure poly-cristalline 2-1 à l'échelle d'un grain unique ou d'un paquet de grains

Dans un autre exemple il peut s'avérer nécessaire pour des structures assemblées, par exemple pour une structure 2-2 assemblée par soudage ou une structure 2-3 assemblée par collage, de contrôler la qualité des jonctions existantes (ex : point de colle, soudure). Le traitement des signaux réceptionnés par l'unité de traitement 4 permet alors de déterminer et évaluer la matrice des rigidités de ces structures. En outre, la propagation des ondes ultrasonores à travers le matériau 2 à caractériser étant sondée selon toutes les directions angulaires (via le deuxième balayage rotatif) et selon deux directions de propagation normales entre elles (via le premier balayage radial, une pluralité de secteurs angulaires étant utilisés pour la réception) les modes de réalisations proposés permettent d'évaluer avec une très grande précision la présence d'une fissure, et plus généralement de toute information du matériau 2 orientée selon une direction privilégiée.

Un troisième exemple d'application des modes de réalisations concerne la caractérisation par imagerie d'un matériau 2 présentant des pertes d'épaisseur liées à de l'amincissement par corrosion. L'unité de traitement 4 via une mesure des vitesses des modes guidés des ondes ultrasonores guidées à travers le matériau 2 peut, grâce à des mesures effectuées selon toutes les directions angulaires, détecter des modes se propageant à des vitesses différentes, ces différences de vitesses traduisant une perte d'épaisseur dans le matériau 2. L'unité de traitement 4 peut alors via un algorithme de reconstruction tomographique représenter la perte d'épaisseur dans le matériau 2.

## Revendications

1. Dispositif (100) de caractérisation non-destructive d'un matériau (2 ; 2-1 ; 2-2 ; 2-3), le dispositif (100) comprenant des cellules (10) d'émission/réception, chaque cellule (10) étant configurée pour, dans un mode d'émission, émettre des ondes ultrasonores en direction du matériau (2 ; 2-1 ; 2-2 ; 2-3) à caractériser et, dans un mode de réception, recevoir des ondes ultrasonores transmises à travers ledit matériau (2 ; 2-1 ; 2-2 ; 2-3), le dispositif (100) de caractérisation non-destructive comprenant un anneau (500 ; 500-1 ; 500-2 ; 500-3 ; 500-4) constitué d'une pluralité de secteurs angulaires (501) adjacents, chaque secteur angulaire (501) comprenant dans une direction radiale (DR) de l'anneau (500 ; 500-1 ; 500-2 ; 500-3 ; 500-4) un empilement de cellules (10) d'émission/réception, **caractérisé en ce que** le dispositif (100) comprend en outre des moyens de commande (3) comportant
- un premier module (300) de sélection configuré pour sélectionner un secteur angulaire (501) comme secteur angulaire d'émission,
- un deuxième module (301) de sélection configuré pour sélectionner un ensemble (502) de secteurs angulaires (501) adjacents comme secteurs angulaires de réception, le deuxième module étant configuré pour sélectionner ledit ensemble (502) sur une plage angulaire diamétralement opposée au secteur angulaire d'émission,
- un premier module (302) de commutation configuré pour commuter la totalité des cellules des secteurs angulaires de réception dans le mode de réception,
- un deuxième module (303) de commutation configuré pour commuter alternativement une cellule (10) à la fois du secteur angulaire d'émission dans le mode d'émission,
les moyens de commande (3) étant configurés pour actionner les modules (300, 301, 302, 303) pour différents secteurs angulaires (501).

2. Dispositif (100) de caractérisation selon la revendication 1, dans lequel chaque secteur angulaire (501) comporte le même nombre de cellules (10).

3. Dispositif (100) de caractérisation selon la revendication 1, dans lequel l'anneau (500-1 ; 500-2 ; 500-3 ; 500-4) comprend une première plage angulaire (A1-1 ; A1-2 ; A1-3 ; A1-4) et une seconde plage angulaire (A2-1 ; A2-2 ; A2-3 ; A2-4), chaque secteur angulaire (501) de la première plage angulaire (A1-1 ; A1-2 ; A1-3 ; A1-4) comportant un nombre de cellules (10) inférieur au nombre de cellules (10) des secteurs angulaires (501) de la seconde plage angulaire (A2-1 ; A2-2 ; A2-3 ; A2-4).

4. Dispositif (100) de caractérisation selon la revendication 3, dans lequel les secteurs angulaires (501) de la première plage angulaire (A1-1) et de la seconde plage angulaire (A2-1) s'étendent depuis un même bord circonférentiel intérieur de l'anneau (500-1).

5. Dispositif (100) de caractérisation selon la revendication 3, dans lequel les secteurs angulaires (501) de la première plage angulaire (A1-2 ; A1-3 ; A1-4) et de la seconde plage angulaire (A2-2 ; A2-3 ; A2-4) s'étendent depuis un même bord circonférentiel extérieur de l'anneau (500-2 ; 500-3 ; 500-4).

6. Procédé de caractérisation non-destructive d'un matériau (2 ; 2-1 ; 2-2 ; 2-3) mis en œuvre par le dispositif (100) de caractérisation non-destructive de l'une quelconque des revendications 1 à 5, ce procédé comprenant :
a) une étape de positionnement du dispositif (100) au contact ou autour dudit matériau (2 ; 2-1 ; 2-2 ; 2-3),
b) la sélection d'un secteur angulaire (501) comme secteur angulaire d'émission,
c) la sélection d'un ensemble (502) de secteurs angulaires (501) adjacents comme secteurs angulaires de réception, ledit ensemble (502) étant sélectionné sur une plage angulaire diamétralement opposée au secteur angulaire d'émission,
d) la commutation de la totalité des cellules (10) des secteurs angulaires de réception dans le mode de réception,
e) une étape d'émission d'ondes ultrasonores par une cellule (10) dans le mode d'émission en direction dudit matériau (2 ; 2-1 ; 2-2; 2-3), générant des ondes ultrasonores transmises à travers ledit matériau (2 ; 2-1 ; 2-2 ; 2-3),
f) une étape de réception par les cellules (10) dans le mode de réception des ondes ultrasonores transmises à travers ledit matériau (2 ; 2-1 ; 2-2; 2-3),
g) une étape de traitement des ondes ultrasonores transmises à travers ledit matériau (2 ; 2-1 ; 2-2 ; 2-3) après l'étape de réception.

7. Procédé de caractérisation selon la revendication 6 comprenant en outre :
h) la commutation alternative d'une cellule (10) du secteur angulaire d'émission dans le mode d'émission.

8. Procédé selon la revendication 7 **caractérisé en ce qu'**une seule cellule (10) du secteur angulaire d'émission est commutée à la fois dans le mode d'émission.

9. Procédé de caractérisation selon les revendications 7 ou 8, **caractérisé en ce qu'**il comprend après chaque étape de traitement des ondes ultrasonores transmises la répétition des étapes b) à f) pour des secteurs angulaires (501) successifs.

## Patentansprüche

1. Vorrichtung (100) zur zerstörungsfreien Charakterisierung eines Materials (2; 2-1; 2-2; 2-3), wobei die Vorrichtung (100) Sende-/Empfangszellen (10) umfasst, wobei jede Zelle (10) dazu ausgelegt ist, in einem Sendemodus Ultraschallwellen in Richtung des zu charakterisierenden Materials (2; 2-1; 2-2; 2-3) auszusenden und in einem Empfangsmodus durch das Material (2; 2-1; 2-2; 2-3) hindurch geleitete Ultraschallwellen zu empfangen, wobei die Vorrichtung (100) zur zerstörungsfreien Charakterisierung einen Ring (500; 500-1; 500-2; 500-3; 500-4) umfasst, der aus einer Vielzahl von benachbarten Winkelsektoren (501) besteht, wobei jeder Winkelsektor (501) in einer radialen Richtung (DR) des Rings (500; 500-1; 500-2; 500-3; 500-4) einen Stapel von Sende-/Empfangszellen (10) umfasst, **dadurch gekennzeichnet, dass** die Vorrichtung (100) ferner Steuermittel (3) aufweist, umfassend
- ein erstes Auswahlmodul (300), das dazu ausgelegt ist, einen Winkelsektor (501) als Sende-Winkelsektor auszuwählen,
- ein zweites Auswahlmodul (301), das dazu ausgelegt ist, eine Anordnung (502) von benachbarten Winkelsektoren (501) als Empfangs-Winkelsektoren auszuwählen, wobei das zweite Modul dazu ausgelegt ist, die Anordnung (502) über einen Winkelbereich auszuwählen, der dem Sende-Winkelsektor diametral gegenüberliegt,
- ein erstes Schaltmodul (302), das dazu ausgelegt ist, alle Zellen der Empfangs-Winkelsektoren in den Empfangsmodus zu schalten,
- ein zweites Schaltmodul (303), das dazu ausgelegt ist, abwechselnd eine Zelle (10) des Sende-Winkelsektors zur gleichen Zeit in den Sendemodus zu schalten,
wobei die Steuermittel (3) dazu ausgelegt sind, die Module (300, 301, 302, 303) für verschiedene Winkelsektoren (501) zu betätigen.

2. Vorrichtung (100) zur Charakterisierung nach Anspruch 1, bei der jeder Winkelsektor (501) die gleiche Anzahl von Zellen (10) umfasst.

3. Vorrichtung (100) zur Charakterisierung nach Anspruch 1, bei der der Ring (500-1; 500-2; 500-3; 500-4) einen ersten Winkelbereich (A1-1; A1-2; A1-3; A1-4) und einen zweiten Winkelbereich (A2-1; A2-2; A2-3; A2-4) umfasst, wobei jeder Winkelsektor (501) des ersten Winkelbereichs (A1-1; A1-2; A1-3; A1-4) eine Anzahl von Zellen (10) umfasst, die kleiner als die Anzahl von Zellen (10) der Winkelsektoren (501) des zweiten Winkelbereichs (A2-1; A2-2; A2-3; A2- 4) ist.

4. Vorrichtung (100) zur Charakterisierung nach Anspruch 3, bei der sich die Winkelsektoren (501) des ersten Winkelbereichs (A1-1) und des zweiten Winkelbereichs (A2-1) von einer gleichen Innenumfangskante des Rings (500-1) aus erstrecken.

5. Vorrichtung (100) zur Charakterisierung nach Anspruch 3, bei der sich die Winkelsektoren (501) des ersten Winkelbereichs (A1-2; A1-3; A1-4) und des zweiten Winkelbereichs (A2-2; A2-3; A2-4) von einer gleichen Außenumfangskante des Rings (500-2; 500-3; 500-4) aus erstrecken.

6. Verfahren zur zerstörungsfreien Charakterisierung eines Materials (2; 2-1; 2-2; 2-3), das durch die Vorrichtung (100) zur zerstörungsfreien Charakterisierung von einem der Ansprüche 1 bis 5 durchgeführt wird, wobei dieses Verfahren umfasst:
a) einen Schritt des Positionierens der Vorrichtung (100) in Kontakt mit oder um das Material (2; 2-1; 2-2; 2-3) herum,
b) das Auswählen eines Winkelsektors (501) als Sende-Winkelsektor,
c) das Auswählen einer Anordnung (502) von benachbarten Winkelsektoren (501) als Empfangs-Winkelsektoren, wobei die Anordnung (502) über einen Winkelbereich ausgewählt wird, der dem Sende-Winkelsektor diametral gegenüberliegt,
d) das Umschalten aller Zellen (10) der Empfangs-Winkelsektoren in den Empfangsmodus,
e) einen Schritt des Aussendens von Ultraschallwellen durch eine Zelle (10) im Sendemodus in Richtung des Materials (2; 2-1; 2-2; 2-3), wodurch Ultraschallwellen erzeugt werden, die durch das Material (2; 2-1; 2-2; 2-3) hindurch geleitet werden,
f) einen Schritt des Empfangens der durch das Material (2; 2-1; 2-2; 2-3) hindurch geleiteten Ultraschallwellen durch die Zellen (10) im Empfangsmodus,
g) einen Schritt des Verarbeitens der durch das Material (2; 2-1; 2-2; 2-3) hindurch geleiteten Ultraschallwellen nach dem Empfangsschritt.

7. Charakterisierungsverfahren nach Anspruch 6, ferner umfassend:
h) das abwechselnde Umschalten einer Zelle (10) des Sende-Winkelsektors in den Sendemodus.

8. Verfahren nach Anspruch 7, **dadurch gekennzeichnet, dass** eine einzige Zelle (10) des Sende-Winkelsektors zur gleichen Zeit in den Sendemodus geschaltet wird.

9. Charakterisierungsverfahren nach Anspruch 7 oder 8, **dadurch gekennzeichnet, dass** es nach jedem Schritt des Verarbeitens der hindurch geleiteten Ultraschallwellen die Wiederholung der Schritte b) bis f) für aufeinanderfolgende Winkelsektoren (501) umfasst.

## Claims

1. A characterization device (100) for non-destructively characterizing a material (2; 2-1; 2-2; 2-3), the device (100) comprising emitter/receiver cells (10), each cell (10) being configured in an emit mode to emit ultrasound waves towards the material (2; 2-1; 2-2; 2-3) for characterizing, and in a receive mode to receive ultrasound waves that have been transmitted through said material (2; 2-1; 2-2; 2-3), the non-destructive characterization device (100) comprises a ring (500; 500-1; 500-2; 500-3; 500-4) made up of a plurality of adjacent angular sectors (501), each angular sector (501) comprising ultrasound cells (10) stacked in a radial direction (DR) of the ring (500; 500-1; 500-2; 500-3; 500-4), **characterized in that** the device (100) further comprises control means (3) comprising:
- a first selector module (300) configured to select an angular sector (501) as an emit angular sector;
- a second selector module (301) configured to select a set (502) of adjacent angular sectors (501) as receive angular sectors, the second module being configured to select said set (502) over an angular range that is diametrically opposite the emit angular sector;
- a first switch module (302) configured to switch all of the cells in the receive angular sectors into receive mode; and
- a second switch module (303) configured to switch one cell (10) at a time in alternation in the emit angular sector into emit mode;
the control means (3) being configured to actuate the modules (300, 301, 302, 303) for different angular sectors (501).

2. A characterization device (100) according to claim 1, wherein each angular sector (501) has the same number of cells (10).

3. A characterization device (100) according to claim 1, wherein the ring (500-1; 500-2; 500-3; 500-4) comprises a first angular range (A1-1; A1-2; A1-3; A1-4) and a second angular range (A2-1; A2-2; A2-3; A2-4), each angular sector (501) of the first angular range (A1-1; A1-2; A1-3; A1-4) having a number of cells (10) that is less than the number of cells (10) in the angular sectors (501) of the second angular range (A2-1; A2-2; A2-3; A2-4).

4. A characterization device (100) according to claim 3, wherein the angular sectors (501) of the first angular range (A1-1) and of the second angular range (A2-1) extend from the same inner circumferential edge of the ring (500-1).

5. A characterization device (100) according to claim 3, wherein the angular sectors (501) of the first angular range (A1-2; A1-3; A1-4) and of the second angular range (A2-2; A2-3; A2-4) extend from the same outer circumferential edge of the ring (500-2; 500-3; 500-4).

6. A characterization method for non-destructively characterizing a material (2; 2-1; 2-2; 2-3), the method being performed by the non-destructive characterization device (100) according to any one of claims 1 to 5, the method comprising:
a) a step of positioning the device (100) in contact with or around said material (2; 2-1; 2-2; 2-3);
b) selecting an angular sector (501) as an emit angular sector;
c) selecting a set (502) of adjacent angular sectors (501) as receive angular sectors, said set (502) being selected over an angular range that is diametrically opposite the emit angular sector;
d) switching all of the cells (10) of the receive angular sectors into receive mode;
e) a step of emitting ultrasound waves by a cell (10) in emit mode towards said material (2; 2-1; 2-2; 2-3), thereby generating ultrasound waves that are transmitted through said material (2; 2-1; 2-2; 2-3);
f) a step of the cells (10) in receive mode receiving the ultrasound waves transmitted through said material (2; 2-1; 2-2; 2-3); and
g) a step of processing ultrasound waves transmitted through said material (2; 2-1; 2-2; 2-3) after the step of receiving them.

7. A characterization method according to claim 6, further comprising:
h) switching in alternation one cell (10) of the emit angular sector into emit mode.

8. A method according to claim 7, **characterized in that** only one cell (10) of the emit angular sector is switched into emit mode at a time.

9. A characterization method according to claim 7 or claim 8, **characterized in that**, after each step of processing transmitted ultrasound waves, it comprises repeating steps b) to f) for successive angular sectors (501).
